# EUROPEAN PATENT SPECIFICATION

(11) **EP 4 310 415 B1**
(45) Date of publication and mention of the grant of the patent: **18.02.2026**
(21) Application number: 22770623.1
(22) Date of filing: 18.03.2022
(51) Int. Cl.: F25B 1/00, F25B 41/20, F25B 49/02, H01M 10/6569, B60H 1/32, B60H 1/00, F25B 9/00, F25B 43/00

(54) **FLUID MANAGEMENT APPARATUS AND HEAT MANAGEMENT SYSTEM**
FLÜSSIGKEITSMANAGEMENTVORRICHTUNG UND WÄRMEMANAGEMENTSYSTEM
APPAREIL DE GESTION DE FLUIDES ET SYSTÈME DE GESTION DE CHALEUR

(30) Priority: 19.03.2021 CN 202110294249
(43) Date of publication of application: 24.01.2024
(73) Proprietor: Zhejiang Sanhua Automotive Components Co., Ltd., Hangzhou, Zhejiang 310018 (CN)
(72) Inventor: JIANG, Zhengang, Hangzhou Economic & technological Development Area Hangzhou, Zhejiang 310018 (CN); XU, Yong, Hangzhou Economic & technological Development Area Hangzhou, Zhejiang 310018 (CN); CHEN, Zhenwen, Hangzhou Economic & technological Development Area Hangzhou, Zhejiang 310018 (CN); GUO, Yao, Hangzhou Economic & technological Development Area Hangzhou, Zhejiang 310018 (CN); JIANG, Han, Hangzhou Economic & technological Development Area Hangzhou, Zhejiang 310018 (CN)
(74) Representative: Epping - Hermann - Fischer
(86) International application number: PCT/CN2022/081628
(87) International publication number: WO 2022/194271

(56) References cited:
- WO-A1-2021/048095
- WO-A1-2021/049435
- CN-A- 109 838 586
- CN-A- 110 758 043
- CN-A- 112 443 679
- CN-U- 211 204 496
- CN-U- 211 233 423
- JP-A- 2000 111 211
- JP-A- 2014 218 211

## Description

The present application claims priority to Chinese Patent Application No. 202110294249.8, titled "FLUID MANAGEMENT APPARATUS AND HEAT MANAGEMENT SYSTEM", filed on March 19, 2021 with the China National Intellectual Property Administration.

### FIELD

The present application relates to the technical field of fluid management, and in particular to a fluid management device and a thermal management system.

### BACKGROUND

A thermal management system includes a number of functional components, and the functional components are connected through pipelines to form the thermal management system. It is a technical problem to provide a fluid management device that is beneficial to optimization of the thermal management system.

Document WO 2021/048095 A1 provides a compact module for controlling the temperature of a motor vehicle, comprising a refrigerant circuit for guiding a refrigerant, an electrical refrigerant compressor and two heat exchangers as well as an expansion valve, and a channel plate in which refrigerant channels of the refrigerant circuit and refrigerant channels for guiding a refrigerant are integrated, and comprising a modular valve unit as a connection region for refrigerant conduits of the motor vehicle.

### SUMMARY

The invention is set out in the appended set of claims. An object of the present application is to provide a fluid management device and a thermal management system to solve the above problems.

A fluid management device is provided according to an embodiment of the present application. The fluid management device includes a heat exchange module, a fluid management module, and a connector, the fluid management device has a communication channel, at least part of the communication channel is located in the connector, and the communication channel communicates with a flow channel of the heat exchange module; the fluid management module includes a block and a valve core, the valve core has a through channel, the fluid management module has a throttling chamber, a valve chamber, and a gas-liquid separation chamber, the valve chamber and the gas-liquid separation chamber are located inside the block, the valve chamber communicates with the communication channel, the valve core is arranged in the valve chamber; in a working state of the fluid management device, the valve core is configured to make the valve chamber be in communication with the gas-liquid separation chamber through the throttling chamber or the through channel;
the connector includes a first side portion and a second side portion, the heat exchange module is fixedly connected or limitedly connected to the first side portion, and the block is fixedly connected or limitedly connected to the second side portion; and
the heat exchange module includes a plurality of stacked plates, along a stacking direction of the plates, at least part of the heat exchange module is located at one side of the connector, at least part of the fluid management module is located at the other side of the connector, and the heat exchange module and the fluid management module are arranged at different sides of the connector.

A thermal management system is provided according to another embodiment of the present application. The thermal management system includes a compressor, a first heat exchanger, a second heat exchanger, and a fluid management device according to any one of above solutions, the fluid management device has a first opening, a second opening, a third opening, a fourth opening, a fifth opening, a sixth opening, and a seventh opening, an outlet of the compressor communicates with the fifth opening, the second opening communicates with the first opening through the first heat exchanger, the third opening communicates with a first inlet of the compressor, the fourth opening communicates with the fifth opening through the second heat exchanger, and the sixth opening communicates with a second inlet of the compressor.

The fluid management device and the thermal management system according to the embodiments of the present application include the heat exchange module, the fluid management module, and the connector. The fluid management module is arranged at one side of the connector, the heat exchange module is arranged at the other side of the connector, and the fluid management module and the heat exchange module are arranged on different sides of the connector, so that the size of the fluid management module is reduced, the mass center of the fluid management device is relatively close to the connector, and the fluid management device is relatively stable. In addition, the heat exchange module and the fluid management module are arranged at different sides of the connector, which is also beneficial to avoiding the heat exchange module from interfering with the fluid management module during heat exchange.

### BRIEF DESCRIPTION OF THE DRAWINGS

Figure 1 is a three-dimensional structural schematic view of a fluid management device according to a first embodiment of the present application from a perspective;
Figure 2 is a three-dimensional structural schematic view of the fluid management device in Figure 1 from another perspective;
Figure 3 is an exploded structural schematic view of the fluid management device in Figure 1 from a perspective;
Figure 4 is an exploded structural schematic view of the fluid management device in Figure 1 from another perspective;
Figure 5 is a three-dimensional structural schematic view of a connector in Figure 1 from a perspective;
Figure 6 is a three-dimensional structural schematic view of a connector in Figure 4 from another perspective;
Figure 7 is a perspective structural schematic view of the connector in Figure 5;
Figure 8 is a three-dimensional structural schematic view of a fluid management device according to a second embodiment of the present application from a perspective;
Figure 9 is a three-dimensional structural schematic view of the fluid management device in Figure 8 from another perspective;
Figure 10 is a top view of a fluid management module in Figure 1;
Figure 11 is a cross-sectional schematic view taken along line A-A in Figure 10; and
Figure 12 is a schematic view showing connections of a thermal management system according to an embodiment of the present application.

### DETAILED DESCRIPTION OF EMBODIMENTS

A fluid management device according to technical solutions of the present application may have multiple embodiments, at least one embodiment can be applied to a vehicle thermal management system, and at least one embodiment can be applied to other thermal management systems such as a household thermal management system or a commercial thermal management system. A fluid management device applicable to a vehicle thermal management system is described hereinafter as an example with reference to the drawings. The fluid is a refrigerant, including R134a or CO₂ or other refrigerants.

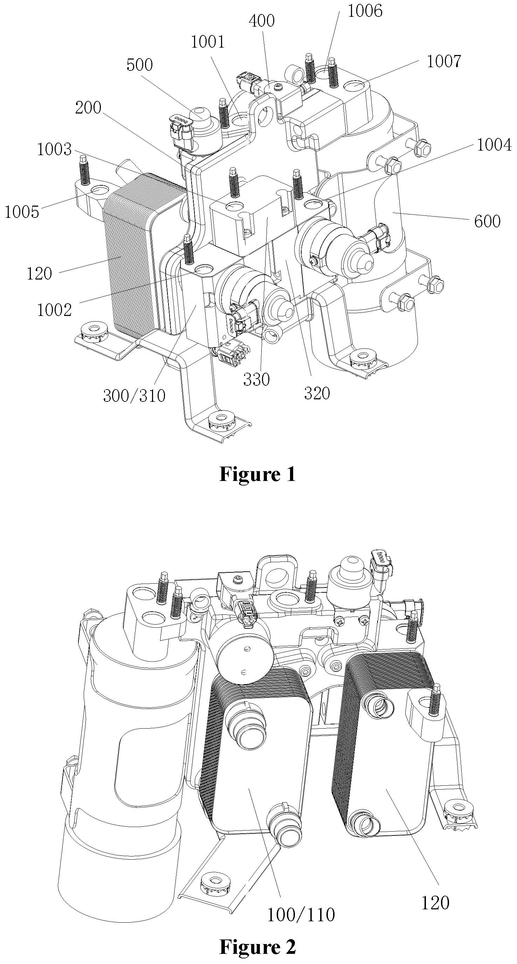

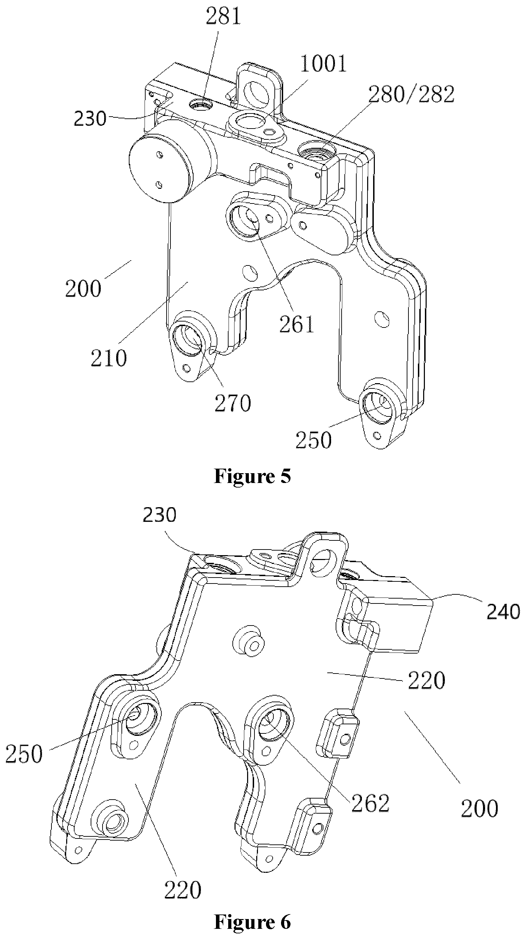

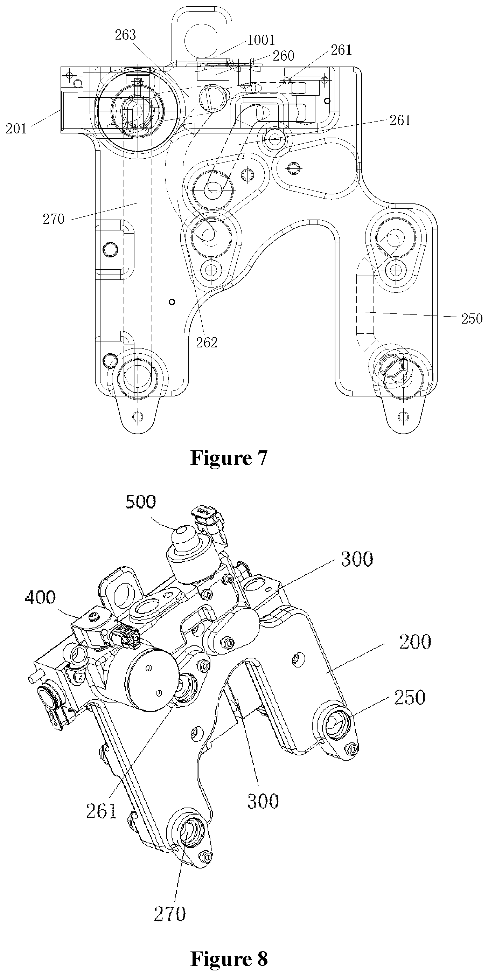

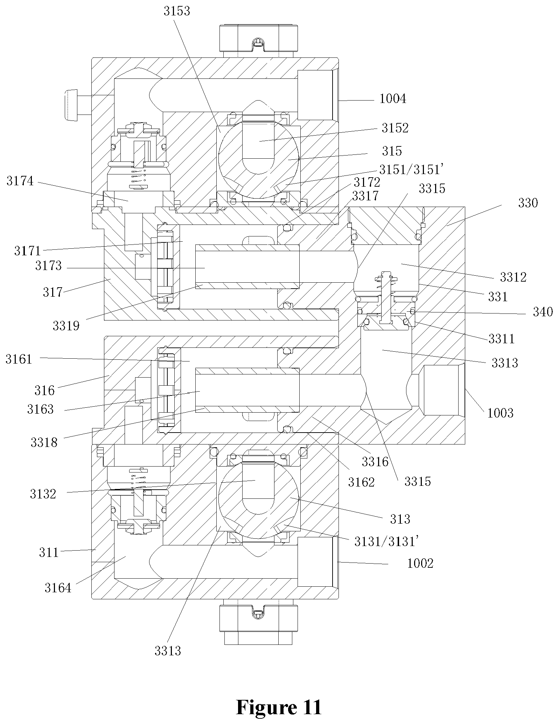

Referring to Figures 1 to 11, the fluid management device 10 includes a fluid management component, a fluid management module 300, and a connector 200. The fluid management module 300 is fixedly connected or limitedly connected to the connector 200. The connector 200 includes a mounting portion 280, the mounting portion 280 has a mounting hole, and at least part of the fluid management component is arranged in the mounting hole. In the embodiment, the fluid management component includes a throttling unit 500 and a valve unit 400; correspondingly, the mounting portion 280 includes a first mounting portion and a second mounting portion. The first mounting portion has a first mounting hole 281, and the second mounting portion has a second mounting hole 282. At least part of the valve unit 400 is arranged in the first mounting hole 281, and the valve unit 400 is fixedly connected or limitedly connected to the first mounting portion; at least part of the throttling unit 500 is arranged in the second mounting hole 282; and the throttling unit 500 is fixedly connected or limitedly connected to the second mounting portion. The fluid management device 10 has a communication channel, and at least part of the communication channel is located in the connector 200. The fluid management component can adjust an opening degree and/or opening-closing of a second communication channel. Specifically, the communication channel includes a first communication channel 250 and the second communication channel 260. The second communication channel 260 includes a first sub-channel 261, a second sub-channel 262, and a third sub-channel 263. A wall of the second mounting portion is provided with an opening, and the opening of the second mounting portion communicates with the first sub-channel 261. The throttling unit 500 can adjust an opening degree of the first sub-channel 261. A wall of the first mounting portion is provided with an opening, and the opening of the first mounting portion communicates with the third sub-channel 263. The valve unit 400 can open and close the third sub-channel 263. The fluid management module 300 includes at least one of a first fluid management module 310 and a second fluid management module 320. The first fluid management module 310 includes a first valve core 313, the fluid management module 300 has a first throttling chamber 3131', a first valve chamber 3133, and a first gas-liquid separation chamber 3161, and the first valve core 313 is arranged in the first valve chamber 3133. The second fluid management module 320 includes a second valve core 315, the fluid management module 300 has a second throttling chamber 3151', a second valve chamber 3153, and a second gas-liquid separation chamber 3171, and the second valve core 315 is arranged in the second valve chamber 3153. The first communication channel 250 communicates with the first valve chamber 3133, and the second sub-channel 262 communicates with the second valve chamber 3153. The fixed connection or limited connection mentioned here includes connection manners such as welding, bonding, or bolted connection. The fluid management module 300, the throttling unit 500, and the valve unit 400 are fixedly connected or limitedly connected to the connector 200. The fluid management device 10 has the first communication channel 250 communicating with the first fluid management module 310, the fluid management device 10 has the second sub-channel 262 communicating with the second fluid management module 320, the valve unit 400 can open and close the third sub-channel 263, and the throttling unit 500 can adjust the opening degree of the first sub-channel 261. In this embodiment, the fluid management device 10 includes the valve unit 400 and the throttling unit 500, and the fluid management module 300 includes the first fluid management module 310 and the second fluid management module 320. During operation, the fluid management device 10 includes a first working mode and a second working mode. In the first working mode, the first valve core 313 allows the first throttling chamber 3131' to communicate the first valve chamber 3133 with the first gas-liquid separation chamber 3161, and the valve unit 400 opens the third sub-channel 263. In the second working mode, the second valve core 315 allows the second throttling chamber 3151' to communicate the second valve chamber 3153 with the second gas-liquid separation chamber 3171, and the valve unit 400 closes the third sub-channel 263. The communication channel is arranged in the connector 200, which is beneficial to preventing internal leakage and also facilitates the miniaturization of the fluid management device 10. The first valve core 313 and the second valve core 315 may be collectively referred to as the valve core, the first valve chamber 3133 and the second valve chamber 3153 may be collectively referred to as the valve chamber, and the first gas-liquid separation chamber 3161 and the second gas-liquid separation chamber 3171 may be collectively referred to as the gas-liquid separation chamber. In other embodiments, the fluid management component may also include a valve unit or a throttling unit, correspondingly, the mounting portion has a first mounting hole corresponding to the valve unit, or the mounting portion has a second mounting hole corresponding to the throttling unit.

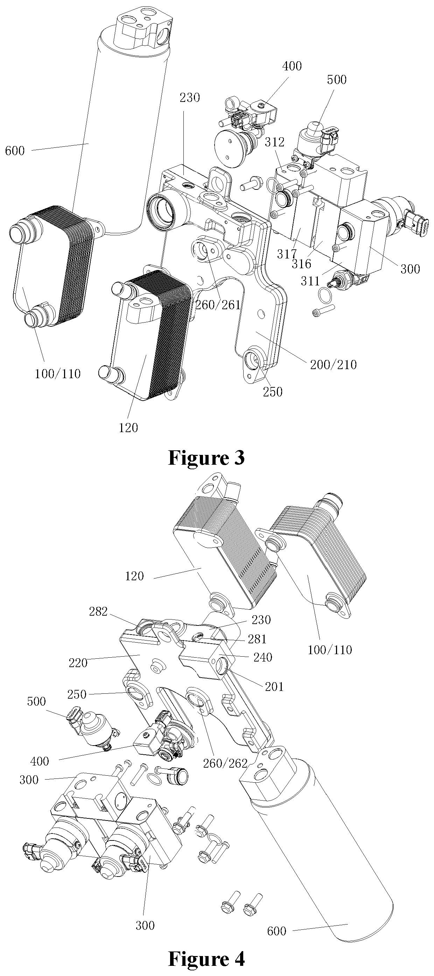

Referring to Figures 3 to 6 and 9 to 11, the fluid management device includes a block. In a specific embodiment, the block includes a first block 311, a second block 316, a third block 312, and a fourth block 317. The first fluid management module 310 includes the first block 311 and the second block 316, the first block 311 is fixedly connected or limitedly connected to the second block 316, and the first block 311 is fixedly connected or limitedly connected to the connector 200. In this embodiment, the connector 200 is connected to the first block 311 through a bolted connection, and the first block 311 has an opening facing the connector 200. The first communication channel 250 communicates with the first valve chamber 3133. The first valve chamber 3133 is located in the first block 311, at least part of the first gas-liquid separation chamber 3161 is located in the second block 316, the first fluid management module 310 has a first channel 3162, at least part of the first channel 3162 is located in the second block 316, the first channel 3162 communicates with the first gas-liquid separation chamber 3161, and the first channel 3162 has an opening facing the first valve core 313. The first valve core 313 has a first groove 3131, and the first groove 3131 is matched with a valve seat of the first fluid management module 310 to form the first throttling chamber 3131'. The first valve core 313 is spherical or quasi-spherical or cylindrical. The second fluid management module 320 includes the third block 312 and the fourth block 317, the third block 312 is fixedly connected or limitedly connected to the fourth block 317, the third block 312 is fixedly connected or limitedly connected to the connector 200, and the connector 200 is connected to the third block 312 through a bolted connection. The third block 312 has an opening facing the connector 200, the second sub-channel 262 communicates with the second valve chamber 3153, and the second valve chamber 3153 is located in the third block 312. At least part of the second gas-liquid separation chamber 3171 is located in the fourth block 317. The first fluid management module 310 has a second channel 3172, at least part of the second channel 3172 is located in the fourth block 317, and the second channel 3172 communicates with the second gas-liquid separation chamber 3171. The second channel 3172 has an opening facing the second valve core 315. The second valve core 315 has a second groove 3151, and the second groove 3151 is matched with a valve seat of the second fluid management module 320 to form the second throttling chamber 3151'. The second valve core 315 is spherical or quasi-spherical or cylindrical. In this embodiment, during operation of the fluid management device 10, the refrigerant throttled by the first throttling chamber 3131' enters the first gas-liquid separation chamber 3161 through the first channel 3162, and then the refrigerant is rotated in a centrifugal manner in the first gas-liquid separation chamber 3161. Similarly, the refrigerant throttled by the second throttling chamber 3151' enters the second gas-liquid separation chamber 3171 through the second channel, and then the refrigerant is rotated in a centrifugal manner in the second gas-liquid separation chamber 3171. In other embodiments, the gas-liquid separation of the fluid management module 300 may also be implemented in other forms, which is not described in detail. In addition, the fluid management module 300 has a first gas channel 3163 and a first liquid channel 3164, to facilitate discharge of the refrigerant from the first fluid management module 310 after gas-liquid separation. The fluid management module 300 has a second gas channel 3173 and a second liquid channel 3174, to facilitate discharge of the refrigerant from the second fluid management module 320 after gas-liquid separation.

During the operation of the fluid management device 10, in the first working mode, the first valve core 313 allows the first throttling chamber 3131' to communicate the first valve chamber 3133 with the first gas-liquid separation chamber 3161; gaseous refrigerant leaves the fluid management device 10 through the first gas channel 3163, and relatively liquid refrigerant leaves the fluid management device 10 through the first liquid channel 3164; the valve unit 400 opens the third sub-channel 263, the throttling unit 500 closes the second sub-channel 262, and the second valve core 315 blocks communication between the second valve chamber 3153 and the second gas-liquid separation chamber 3171. In the second working mode, the first valve core 313 blocks communication between the first valve chamber 3133 and the first gas-liquid separation chamber 3161, the second valve core 315 allows the second throttling chamber 3151' to communicate the second valve chamber 3153 with the second gas-liquid separation chamber 3171, and the valve unit 400 closes the third sub-channel 263; the gaseous refrigerant leaves the fluid management device 10 through the second gas channel 3173, and the relatively liquid refrigerant leaves the fluid management device 10 through the second liquid channel 3174; the throttling unit 500 may be opened to throttle and depressurize the refrigerant in the first sub-channel 261, or the throttling unit 500 may not be opened. Further, the first valve core 313 has a first through channel 3132, and the first through channel 3132 has at least two openings in an outer wall of the first valve core 313. When the fluid management device 10 is in the second working mode, the first valve core 313 allows the first through channel 3132 to communicate the first valve chamber 3133 with an outlet of the first fluid management module 310, i.e. a second opening 1002, the first valve core 313 blocks communication between the first valve chamber 3133 and the first gas-liquid separation chamber 3161. The second communication channel 260 is an inlet channel of the fluid management device 10, and the second communication channel 260 has an opening at the connector, i.e. a first opening 1001, that is, the first sub-channel 261, the second sub-channel 262 and the third sub-channel 263 communicate with the first opening 1001. Similarly, the second valve core 315 has a second through channel 3152, and the second through channel 3152 has at least two openings in an outer wall of the second valve core 315. The second valve core 315 can allow the second through channel 3152 to communicate the second valve chamber 3153 with an outlet of the second fluid management module 320, i.e. a fourth opening 1004.

The first fluid management module 310 includes a first control portion 318. During operation of the first fluid management module 310, the first control portion 318 can drive the first valve core 313 to rotate. The first control portion 318 includes a first valve stem drivingly connected to the first valve core 313. The first fluid management module 310 includes a second control portion 321, and the second control portion 321 includes a second valve stem drivingly connected to the second valve core 315. Correspondingly, the first block 311 includes a first valve stem hole portion, the first valve stem hole portion has a first valve stem hole, part of the first valve stem is arranged in the first valve stem hole, and the first valve stem and the first valve stem hole portion are dynamically sealed. Similarly, the third block 312 includes a second valve stem hole portion, the second valve stem hole portion has a second valve stem hole, part of the second valve stem is arranged in the second valve stem hole, and the second valve stem and the second valve stem hole portion are dynamically sealed.

Referring to Figures 1 to 4, the fluid management device 10 includes a heat exchange module 100, and the heat exchange module 100 includes a plurality of stacked plates, where the stacking direction of the plates is defined as a first direction. The connector 200 includes a first side portion 210 and a second side portion 220. Along the first direction, the first side portion 210 is located at one side of the connector 200, the second side portion 220 is arranged on the other side, which is opposite to the one side, of the connector 200, and the side where the first side portion 210 is located and the other side where the second side portion 220 is located are different sides of the connector 200. The heat exchange module 100 is fixedly connected or limitedly connected to the first side portion 210, and the block of the fluid management module 300 is fixedly connected or limitedly connected to the second side portion 220. The heat exchange module 100 may include at least one of a first heat exchange module 120 and a second heat exchange module 110. In the embodiment, the heat exchange module 100 includes the second heat exchange module 110 and the first heat exchange module 120, and both the first heat exchange module 120 and the second heat exchange module 110 are plate heat exchangers. The connector 200 has a third communication channel 270. The first heat exchange module 120 has a first flow channel and a second flow channel, and the second heat exchange module 110 also has a first flow channel and a second flow channel. The first communication channel 250 has an opening, facing the first heat exchange module 120, in the first side portion 210, the first flow channel of the first heat exchange module 120 communicates with the first communication channel 250, the first communication channel 250 has an opening, facing the first block 311, in the second side portion 220, and the first communication channel 250 communicates with the first valve chamber 3133. In this way, the first flow channel of the first heat exchange module 120 communicates with the first valve chamber 3133 through the first communication channel 250. The first sub-channel 261 has an opening, facing the second heat exchange module 110, in the first side portion 210, the first flow channel of the second heat exchange module 110 communicates with the first sub-channel 261, the third communication channel 270 has an opening, facing the second heat exchange module 110, in the first side portion 210, and the first flow channel of the second heat exchange module 110 communicates with the third communication channel 270, in other words, the first sub-channel 261 communicates with the third communication channel 270 through the first flow channel of the second heat exchange module 110. The second sub-channel 262 has an opening, facing the third block 312, in the second side portion 220, and the second sub-channel 262 communicates with the second valve chamber 3153. The fluid management module is located at one side of the connector 200, the heat exchange module 100 is located at the other side of the connector 200, the fluid management module 300 and the heat exchange module 100 are located at different sides of the connector 200, in this way, the size of the fluid management module can be decreased, the mass center of the fluid management device 10 is relatively close to the connector 200, and the fluid management device 10 is more stable. In addition, the heat exchange module and the fluid management module are located at different sides of the connector 200, which is also beneficial to avoiding the heat exchange module 100 from interfering with the fluid management module during heat exchange. In the embodiment, during operation of the fluid management device 10, the fluid in the first flow channel of the first heat exchange module 120 and the first flow channel of the second heat exchange module 110 is refrigerant, and the fluid in the second flow channel of the first heat exchange module 120 and the second flow channel of the second heat exchange module 110 is cooling liquid.

The connector 200 includes a third side portion 230 and a fourth side portion 240, the third side portion 230 and the fourth side portion 240 are located at two sides of the connector, and the third side portion 230 is located above the fourth side portion along a direction of gravity, so that part of the valve unit 400 and part of the throttling unit 500 are located above the third side portion 230. Along the first direction, the first side portion 210 is located at one side of the third side portion 230, and the second side portion 220 is located at the other side, opposite to the one side, of the third side portion 230. The first mounting hole 281 has an opening in a wall of the third side portion 230, and the second mounting hole 282 also has an opening in the wall of the third side portion 230. The connector 200 includes the fourth side portion 240, along the first direction, the first side portion 210 is located at one side of the fourth side portion 240, and the second side portion 220 is located at the other side, opposite to the one side, of the fourth side portion 240. The fluid management device 10 includes a gas-liquid separation portion 600, and the gas-liquid separation portion 600 is fixedly connected or limitedly connected to the fourth side portion 240. The gas-liquid separation portion 600 has a separation cavity, the third communication channel 270 has an opening, facing the gas-liquid separation portion 600, in the fourth side portion 240, and the third communication channel 270 communicates with the separation cavity. Specifically, the fluid management device 10 has a first port 201, and the first port 201 is located in the fourth side portion 240. The first port 201 communicates with the third sub-channel 263, the first port 201 communicates with the third communication channel 270, and the first port 201 faces the gas-liquid separation portion 600. In this way, the refrigerant entering the fluid management device 10 through the second communication channel 260 can enter the gas-liquid separation portion 600 through the valve unit 400, the refrigerant entering the fluid management device 10 through the second communication channel 260 can also enter the gas-liquid separation portion 600 through the throttling unit 500, the second heat exchange module 110 and the third communication channel 270, and the refrigerant entering the fluid management device 10 through the second communication channel 260 can enter the second valve chamber 3153 through the second sub-channel 262.

Referring to Figures 1 to 4, 6 to 8, and 11, the fluid management device 10 has the first opening 1001, the second opening 1002, a third opening 1003, the fourth opening 1004, a fifth opening 1005, a sixth opening 1006, and a seventh opening 1007. The fifth opening 1005 communicates with the first flow channel of the first heat exchange module 120. In the embodiment, the fifth opening 1005 is located in the first heat exchange module 120 or in a tube or a block fixedly connected or limitedly connected to the first heat exchange module 120. The first opening 1001 is located in the third side portion 230, and the first opening 1001 communicates with the second communication channel 260. The valve unit 400 can open and close a communication channel between the first opening 1001 and the separation cavity. The first opening 1001 can communicate with the first flow channel of the first heat exchange module 120 through the throttling unit 500, the first opening 1001 communicates with the second sub-channel 262, and the first opening 1001 can communicate with the second valve chamber 3153 through the second sub-channel 262. Of course, the first opening 1001 may be located in a tube or a block fixedly connected or limitedly connected to the connector 200, which is not described in detail. The second opening 1002 is located in the first block 311, and the first block 311 has a channel communicating the second opening 1002 with the first valve chamber 3133. The first valve core 313 can allow the first throttling chamber 3131' or the first through channel 3132 to communicate the first valve chamber 3133 with the second opening 1002. In the embodiment, the first liquid channel 3164 also communicates with the second opening 1002, and the liquid refrigerant obtained after gas-liquid separation by the first gas-liquid separation chamber 3161 can flow out of the fluid management device 10 through the second opening 1002. The fourth opening 1004 is located in the third block 312, and the third block 312 has a channel communicating the second valve chamber 3153 with the fourth opening 1004. The first valve core 313 can allow the second throttling chamber 3151' or the second through channel 3152 to communicate the second valve chamber 3153 with the fourth opening 1004, and the second liquid channel 3174 also communicates with the fourth opening 1004. The liquid refrigerant obtained after gas-liquid separation by the second gas-liquid separation chamber 3171 can flow out of the fluid management device 10 through the fourth opening 1004. The third opening 1003 is located in the fluid management module 300, and the first gas channel 3163 and the second gas channel 3173 communicate with the third opening 1003. The gaseous refrigerant obtained after gas-liquid separation by the first gas-liquid separation chamber 3161 can be discharged from the fluid management device 10 through the third opening 1003, and the gaseous refrigerant obtained after gas-liquid separation by the second gas-liquid separation chamber 3171 can be discharged from the fluid management device 10 through the third opening 1003. The seventh opening 1007 is an inlet of the gas-liquid separation portion 600, and the sixth opening 1006 is an outlet of the gas-liquid separation portion 600. In the embodiment, both the sixth opening 1006 and the seventh opening 1007 are located in the gas-liquid separation portion 600. In a more specific embodiment, along the direction of gravity, the first opening 1001, the second opening 1002, the third opening 1003, the fourth opening 1004, the fifth opening 1005, the sixth opening 1006, and the seventh opening 1007 face upward, which facilitates the connection between the fluid management device 10 and other components or pipe fittings in the thermal management system.

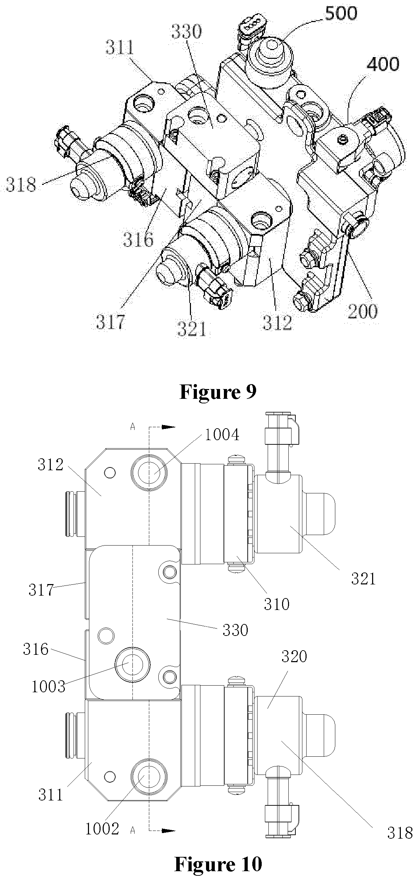

Referring to Figures 9 to 11, the fluid management module 300 includes a communication portion 330, and the communication portion 330 is fixedly connected or limitedly connected to the block. The fixed connection here includes a connection manner that the communication portion 330 and the block being formed as a one-piece structure. In the embodiment, the block includes a fourth block 317 and a second block 316, the second block 316 is fixedly connected or limitedly connected to the communication portion 330, and the fourth block 317 is fixedly connected or limitedly connected to the communication portion 330. In other embodiments, the communication portion 330 may be of a one-piece structure with at least one of the second block 316 and the fourth block 317. The communication portion 330 includes an accommodation portion, the accommodation portion has an accommodation cavity, at least part of the valve component 340 is arranged in the accommodation cavity, and the valve component 340 is fixedly connected or limitedly connected to the accommodation portion. In the embodiment, at least part of the first gas channel 3163 is located in the communication portion 330, and at least part of the second gas channel 3173 is located in the communication portion 330. Specifically, the communication portion 330 has a first connection port, a first communication cavity 3312, and a second communication cavity 3313. The first communication cavity 3312 is a part of the second gas channel 3173, and the second communication cavity 3313 is a part of the first gas channel 3163. The first connection port is the third opening 1003 of the fluid management device 10 or communicates with the third opening 1003, the first communication cavity 3312 communicates with the second gas-liquid separation chamber 3171, and the second communication cavity 3313 communicates with the first gas-liquid separation chamber 3161. The valve component 340 can allow the first communication cavity 3312 to be in one-way communication with the second communication cavity 3313, and the first connection port communicates with the second communication cavity 3313. In this way, the gaseous refrigerant in the second gas-liquid separation chamber 3171 can flow out of the fluid management device 10 from the first connection port through the valve component 340. The gaseous refrigerant in the first gas-liquid separation chamber 3161 can flow out of the fluid management device 10 from the first connection port, and cannot enter the second gas-liquid separation chamber 3171 due to the presence of the valve component 340. In the embodiment, along the direction of gravity, at least part of the communication portion 330 is located above the second block 316, and at least part of the communication portion 330 is located above the fourth block 317. The second block 316 is fixed to the communication portion 330 through a bolted connection, and the fourth block 317 is fixed to the communication portion 330 through a bolted connection. In this way, the fluid management device 10 has a common gas outlet, which can reduce the ports of the fluid management device 10 and facilitate the connection between the fluid management device 10 and other components of the thermal management system. The fluid management device 10 is provided with the valve component 340, which can prevent gas in the first gas-liquid separation chamber 3161 from entering the second gas-liquid separation chamber 3171. In other embodiments, the second block 316 and the fourth block 317 are formed as a one-piece structure, and the communication portion 330 is fixedly connected or limitedly connected to one of the second block 316 and the fourth block 317.

The fluid management device 10 includes a first insertion portion 3316, a second insertion portion 3317, a first holding portion 3162, and a second holding portion 3172. The first insertion portion 3316 is arranged in a holding cavity of the first holding portion 3162, the first insertion portion 3316 is sealingly connected to the first holding portion 3162, the second insertion portion 3317 is arranged in a holding cavity of the second holding portion 3172, and the second insertion portion 3317 is sealingly connected to the second holding portion 3172. The first insertion portion 3316 has a channel communicating the second communication cavity 3313 with the first gas-liquid separation chamber 3161, and then the second communication cavity communicates with the first gas-liquid separation chamber. The second insertion portion 3317 has a channel communicating the first communication cavity 3312 with the second gas-liquid separation chamber 3171, and then the first communication cavity communicates with the second gas-liquid separation chamber. One of the first insertion portion 3316 and the first holding portion 3162 is located at the communication portion 330, and the other is located at the second block 316. One of the second insertion portion 3317 and the second holding portion 3172 is located at the communication portion 330, and the other is located at the fourth block 317. The fluid management device is provided with the insertion portions and the corresponding holding portions, which is convenient for the positioning of the communication portion during installation, and thereby facilitates the installation.

In a specific embodiment, the communication portion 330 includes the first insertion portion 3316 and the second insertion portion 3317, the first holding portion 3162 is located at the second block 316, and a second holding portion 3172 is located at the fourth block 317. The fluid management device 10 includes a first conduit portion 3318 and a second conduit portion 3319. A conduit opening of the first conduit portion 3318 faces away from the first insertion portion 3316, and a conduit opening of the second conduit portion 3319 faces away from the second insertion portion 3317. The first conduit portion 3318 and the first insertion portion 3316 are formed as a one-piece structure or the first conduit portion 3318 is fixedly connected or limitedly connected to the first insertion portion 3316. The second conduit portion 3319 and the second insertion portion 3317 are formed as a one-piece structure or the second conduit portion 3319 is fixedly connected or limitedly connected to the second insertion portion 3317. Part of the first gas channel 3163 is located in the first conduit portion 3318 and the first insertion portion 3316, and part of the second gas channel 3173 is located in the second conduit portion 3319 and the second insertion portion 3317.

In the embodiment, the valve component 340 is a one-way component, the communication portion 330 includes a first hole portion 331, at least part of the first communication cavity 3312 is located in the first hole portion 331, and at least part of the second communication cavity 3313 is located in the first hole portion 331. The first hole portion 331 includes an accommodation portion, and the accommodation portion is used to accommodate the valve component 340. The communication portion 330 has a first communication port 3314 and a second communication port 3315, and the first communication port 3314 is located in a wall of the first hole portion 331, the second communication port 3315 is located in the wall of the first hole portion, the first communication port 3314 communicates with the second gas-liquid separation chamber 3171, and the second communication port 3315 communicates with the first gas-liquid separation chamber 3161. Along an axis direction of the first hole portion 331, the first communication port 3314 is located at one side of the accommodation portion, and the second communication port 3315 is located at the other side of the accommodation portion. In other embodiments, the valve component 340 may be a solenoid valve or a ball valve, which is not described in detail. Compared with the solutions where the valve component 340 is a solenoid valve or a ball valve, the present embodiment has the advantages of convenient installation and low cost, and electric control is not required.

The fluid management device 10 includes a first fixing portion, a second fixing portion, a first matching portion, and a second matching portion. The first fixing portion is fixedly connected or limitedly connected to the first matching portion, and the second fixing portion is fixedly connected or limitedly connected to the second matching portion. In the embodiment, the communication portion 330 is fixed to the second block 316 through a bolted connection, the communication portion 330 is fixed to the fourth block 317 through a bolted connection, that is, the communication portion 330 of the fluid management module is fixedly connected to the second block 316 and the fourth block 317 respectively. In this way, the first fluid management module 310 and the second fluid management module 320 are fixedly connected through the communication portion 330, so that the communication portion 330 not only has a communication function, but also has a fixed connection function. One of the first fixing portion and the first matching portion is located in the communication portion 330, and the other is located at the second block 316. One of the second fixing portion and the second matching portion is located at the communication portion 330, and the other is located at the fourth block 317. In the embodiment, the first matching portion and the second matching portion are respectively located at the second block 316 and the fourth block 317, respectively.

In the first working mode of the fluid management device 10, the first valve core 313 communicates the first valve chamber 3133 with the first gas-liquid separation chamber 3161 through the first throttling chamber 3131', the valve component 340 blocks the communication between the second communication cavity 3313 and the first communication cavity 3312, the gaseous refrigerant in the first gas-liquid separation chamber 3161 flows out of the fluid management device 10 through the first connection port, and the first connection port is an outlet of the fluid management device 10. In the second working mode, the first valve core 313 blocks the communication between the first valve chamber 3133 and the first gas-liquid separation chamber 3161, the second valve core 315 communicates the second valve chamber 3153 with the second gas-liquid separation chamber 3171 through the second throttling chamber 3151', the valve component 340 allows the first communication cavity 3312 to be in one-way communication with the second communication cavity 3313, and the first connection port is an outlet of the fluid management device 10.

Of course, the fluid management device 10 may not be provided with the communication portion 330. The first gas channel 3163 has an outlet in the second block 316 or in a tube or a block connected to the second block 316, and the second gas channel 3173 has an outlet in the fourth block 317 or in a tube or a block connected to the fourth block 317.

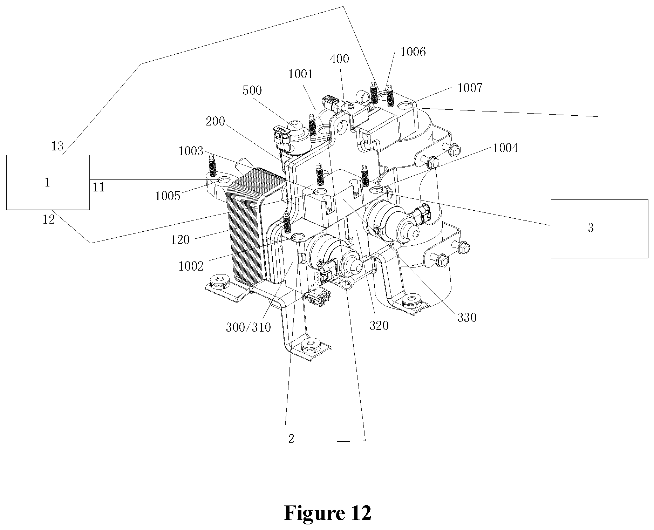

A thermal management system is further provided according to an embodiment of the present application. As shown in Figure 12, the thermal management system includes a compressor 1, a fluid management device 10, a first heat exchanger 2, and a second heat exchanger 3. The compressor 1 has an outlet 11, a first inlet 12, and a second inlet 13. The first inlet 12 is a relatively high pressure inlet, and the second inlet 13 is a relatively low pressure inlet. Specifically, the outlet of the compressor 1 communicates with the fifth opening 1005, one port of the first heat exchanger 2 communicates with the second opening 1002, and another port of the first heat exchanger 2 communicates with the first opening 1001, in other words, the second opening 1002 can communicate with the first opening 1001 through the first heat exchanger 2. The third opening 1003 communicates with the first inlet 12 of the compressor 1. One port of the second heat exchanger 3 communicates with the fourth opening 1004, another port of the second heat exchanger 3 communicates with the seventh opening 1007, in other words, the fourth opening 1004 can communicate with the seventh opening 1007 through the second heat exchanger 3. The sixth opening 1006 communicates with the second inlet 13 of the compressor 1. The compressor 1, the first heat exchanger 2, and the second heat exchanger 3 respectively has an opening communicating with the fluid management device 10, in other words, the thermal management system communicates with the compressor 1, the first heat exchanger 2, and the second heat exchanger 3 through the fluid management device 10. The connection relationship of the thermal management system is relatively simple, and the installation steps can also be reduced.

In the embodiment, the first heat exchanger 2 is arranged in a front-end module of a vehicle, which is used for heat exchange with ambient air, that is, absorbing heat from the ambient air or releasing heat into the ambient air. The second heat exchanger 3 is arranged in an air-conditioning box for regulating the temperature of a passenger compartment. The thermal management system further includes a radiator and a first pump, the second flow channel of the first heat exchange module 120, the first pump and the radiator are in serial communication, and the radiator is arranged in the air-conditioning box for regulating the temperature of the passenger compartment. The thermal management system further includes a second pump and a battery cooler, the second flow channel of the second heat exchange module 110, the second pump, and the battery cooler are in serial communication, and the battery cooler is used to regulate the temperature of the battery.

The thermal management system includes a heating mode and a cooling mode. In the heating mode, the fluid management device 10 is in the first working mode. Specifically, the high-temperature and high-pressure refrigerant releases heat in the first heat exchange module 120, and then the refrigerant enters the first valve chamber 3133 of the first fluid management module 310 through the first communication channel 250 of the connector 200. The first valve core 313 allows the first throttling chamber 3131' to communicate the first valve chamber 3133 with the first gas-liquid separation chamber 3161. The refrigerant, after being throttled and depressurized, undergoes gas-liquid separation in the first gas-liquid separation chamber 3161, and then the gaseous refrigerant enters the first inlet 12 of the compressor 1 through the third opening 1003, the relatively liquid refrigerant enters the first heat exchanger 2 through the second opening 1002, and evaporates and absorbs heat in the first heat exchanger 2. The refrigerant flowing out of the first heat exchanger 2 enters the first opening 1001 of the fluid management device 10. The valve unit 400 opens the third sub-channel 263. The refrigerant enters the separation cavity through the second sub-channel 262, enters the second inlet 13 of the compressor 1 through the sixth opening 1006 to participate in the next cycle. The refrigerant after being throttled undergoes gas-liquid separation in the first gas-liquid separation chamber, and then the gaseous refrigerant enters the compressor 1, which has the effect of increasing gas and supplementing enthalpy for the entire thermal management system and thus can improve the performance of the thermal management system. In the cooling mode, the fluid management device 10 is in the second working mode. The high-temperature and high-pressure refrigerant discharged from the compressor 1 enters the first valve chamber 3133 of the first fluid management module 310 through the first heat exchange module 120 and the first communication channel 250. The first valve core 313 allows the first through channel 3132 to communicate the first valve chamber 3133 with the second opening 1002. The high-temperature and high-pressure refrigerant releases heat in the first heat exchanger 2, then the refrigerant enters the second sub-channel 262 of the connector 200 through the first opening 1001, and then enters the second valve chamber 3153. The second valve core 315 allows the second throttling chamber 3151' to communicate the second valve chamber 3153 with the second gas-liquid separation chamber 3171. The gaseous refrigerant enters the first inlet 12 of the compressor 1 through the third opening 1003, and the relatively liquid refrigerant enters the second heat exchanger 3 through the fourth opening 1004, and evaporates and absorbs heat in the second heat exchanger 3. The refrigerant enters the separation cavity through the seventh opening 1007, and then enters the second inlet 13 of the compressor 1 through the sixth opening 1006 to participate in the next cycle. The refrigerant after being throttled undergoes gas-liquid separation in the second gas-liquid separation chamber, and then the gaseous refrigerant enters the compressor 1, which has the effect of increasing gas and supplementing enthalpy for the entire thermal management system, and thus can improve the performance of the thermal management system. It can be known that the thermal management system of the embodiment has the function of increasing gas and supplementing enthalpy in both the cooling mode and the heating mode, and the performance of the thermal management system is improved.

In addition, the thermal management system further includes a battery cooling mode. In the battery cooling mode, the fluid management device 10 is in the second working mode. The high-temperature and high-pressure refrigerant discharged from the compressor 1 enters the first valve chamber 3133 of the first fluid management module 310 through the first heat exchange module 120 and the first communication channel 250. The first valve core 313 allows the first through channel 3132 to communicate the first valve chamber 3133 with the second opening 1002. The high-temperature and high-pressure refrigerant releases heat in the first heat exchanger 2, and then the refrigerant enters the connector 200 through the first opening 1001. At this time, the valve unit 400 closes the third sub-channel 263, and the second valve core 315 allows the second throttling chamber 3151' to communicate the second valve chamber 3153 with the second gas-liquid separation chamber 3171. The gaseous refrigerant enters the first inlet 12 of the compressor 1 through the third opening 1003. The relatively liquid refrigerant enters the second heat exchanger 3 through the fourth opening 1004, and evaporates and absorbs heat in the second heat exchanger 3. The refrigerant enters the separation cavity through the seventh opening 1007, and then enters the second inlet 13 of the compressor 1 through the sixth opening 1006 to participate in the next cycle. The throttling unit 500 is opened, the refrigerant is throttled and depressurized by the throttling unit 500, then enters the second heat exchange module 110, and the refrigerant evaporates and absorbs heat in the second heat exchange module 110. The refrigerant enters the separation cavity through the third communication channel 270, and then enters the second inlet 13 of the compressor 1 through the sixth opening 1006 to participate in the next cycle. In other embodiments, the second valve core 315 blocks the communication between the second valve chamber 3153 and the fourth opening 1004, and the second valve core 315 blocks the communication between the second valve chamber 3153 and the second gas-liquid separation chamber 3171. In this case, the second heat exchanger 3 does not participate in heat exchange.

It should be noted that the above embodiments are only used to illustrate the present application and are not intended to limit the technical solutions described in the present application. Although the specification has described the present application in detail with reference to the embodiments, it should be understand that, those skilled in the art may still make modifications to the present application within the scope of the claims of the present application.

## Claims

1. A fluid management device (10), comprising a heat exchange module (100), a fluid management module (300), and a connector (200), **characterized in that**
the fluid management device (10) has a communication channel, at least part of the communication channel is located in the connector (200), and the communication channel communicates with a flow channel of the heat exchange module (100);
the fluid management module (300) comprises a block and a valve core, the valve core has a through channel; the fluid management module (300) has a throttling chamber, a valve chamber, and a gas-liquid separation chamber, the valve chamber and the gas-liquid separation chamber are located inside the block, the valve chamber communicates with the communication channel, the valve core is arranged in the valve chamber; in a working state of the fluid management device (10), the valve core is configured to make the valve chamber be in communication with the gas-liquid separation chamber through the throttling chamber or the through channel;
the connector (200) comprises a first side portion (210) and a second side portion (220), the heat exchange module (100) is fixedly connected or limitedly connected to the first side portion (210), and the block is fixedly connected or limitedly connected to the second side portion (220); and
the heat exchange module (100) comprises a plurality of stacked plates, along a stacking direction of the plates, at least part of the heat exchange module (100) is located at one side of the connector (200), at least part of the fluid management module (300) is located at the other side of the connector (200), and the heat exchange module (100) and the fluid management module (300) are arranged at different sides of the connector (200).

2. The fluid management device (10) according to claim 1, wherein
the connector (200) comprises a third side portion (230), along the stacking direction of the plates, the first side portion (210) is located at one side of the third side portion (230), and the second side portion (220) is located at the other side of the third side portion (230);
the fluid management device (10) comprises a valve unit (400) and a throttling unit (500),
the connector (200) comprises a mounting portion (280), the mounting portion (280) has a first mounting hole (281) and a second mounting hole (282), each of the first mounting hole (281) and the second mounting hole (282) has an opening in a wall of the third side portion (230), at least part of the valve unit (400) is located at the first mounting hole (281), and at least part of the throttling unit (500) is located at the second mounting hole (282).

3. The fluid management device (10) according to claim 2, wherein
the connector (200) comprises a fourth side portion (240), along the stacking direction of the plates, the first side portion (210) is located at one side of the fourth side portion (240), and the second side portion (220) is located at the other side, which is opposite to the one side, of the fourth side portion (240); the third side portion (230) is arranged above the fourth side portion (240) in a direction of gravity; and
the fluid management device (10) comprises a gas-liquid separation portion (600), wherein the gas-liquid separation portion (600) is fixedly connected or limitedly connected to the fourth side portion (240), the gas-liquid separation portion (600) has a separation cavity, the communication channel has an opening, facing the gas-liquid separation portion (600), in the fourth side portion (240), and the communication channel communicates with the separation cavity.

4. The fluid management device (10) according to any one of claims 1 to 3, wherein
the heat exchange module (100) comprises a first heat exchange module (120), and the first heat exchange module (120) has a first flow channel; the communication channel comprises a first communication channel (250), and the first communication channel (250) has an opening in the first side portion (210); the first flow channel of the first heat exchange module (120) communicates with the first communication channel (250), and the first communication channel (250) has an opening in the second side portion (220); and
the block comprises a first block (311) and a second block (316), the first block (311) is fixedly connected or limitedly connected to the second block (316); the valve chamber comprises a first valve chamber (3133), the gas-liquid separation chamber comprises a first gas-liquid separation chamber (3161), the first gas-liquid separation chamber (3161) is located inside the second block (316), the first valve chamber (3133) is located inside the first block (311);
the valve core comprises a first valve core (313), the first valve core (313) is arranged in the first valve chamber (3133), the first valve core (313) comprises a first through channel (3132), the throttling chamber comprises a first throttling chamber (3131'), the first valve core (313) is configured to make the first valve chamber (3133) be in communication with the first gas-liquid separation chamber (3161) through the first throttling chamber (3131') or the first through channel (3132); the first block (311) has an opening facing the second side portion (220), and the first communication channel (250) communicates with the first valve chamber (3133).

5. The fluid management device (10) according to claim 4, wherein
the communication channel comprises a second communication channel (260), the second communication channel (260) has an opening in the third side portion (230), and the second communication channel (260) comprises a first sub-channel (261), a second sub-channel (262), and a third sub-channel (263); and wherein
the first sub-channel (261), the second sub-channel (262), and the third sub-channel (263) communicate with the opening of the second communication channel (260) in the third side portion (230); the first sub-channel (261) has an opening in the first side portion (210), the second sub-channel (262) has an opening in the second side portion (220), the third sub-channel (263) has an opening, facing the gas-liquid separation portion (600), in the fourth side portion (240), and the third sub-channel (263) communicates with the separation cavity.

6. The fluid management device (10) according to claim 5, wherein
the heat exchange module (100) further comprises a second heat exchange module (110), and the fluid management device (10) further comprises a valve unit (400) and a throttling unit (500), wherein
the second heat exchange module (110) has a first flow channel, the opening of the first sub-channel (261) in the first side portion (210) faces the second heat exchange module (110), the first flow channel of the second heat exchange module (110) communicates with the first sub-channel (261); a wall of the second mounting hole (282) has an opening communicating with the first sub-channel (261), the throttling unit (500) is configured to adjust an opening degree of the first sub-channel (261); a wall of the first mounting hole (281) has an opening communicating with the third sub-channel (263), and the valve unit (400) is configured to open or close the third sub-channel (263).

7. The fluid management device (10) according to claim 5 or 6, wherein
the valve chamber comprises a second valve chamber (3153), the gas-liquid separation chamber comprises a second gas-liquid separation chamber (3171), the valve core comprises a second valve core (315), the second valve core (315) is located in the second valve chamber (3153), the second valve core (315) has a second through channel (3152), the throttling chamber comprises a second throttling chamber (3151'), the second valve core (315) is configured to make the second valve chamber (3153) be in communication with the second gas-liquid separation chamber (3171) through the second throttling chamber (3151') or the second through channel (3152); and
the block comprises a third block (312) and a fourth block (317), the third block (312) is fixedly connected or limitedly connected to the fourth block (317), the second valve chamber (3153) is located inside the third block (312), at least part of the second gas-liquid separation chamber (3171) is located in the fourth block (317), the third block (312) has an opening facing the second side portion (220), and the second sub-channel (262) communicates with the second valve chamber (3153).

8. The fluid management device (10) according to claim 7, wherein
the fluid management device (10) is provided with a first opening (1001), a second opening (1002), a third opening (1003), a fourth opening (1004), a fifth opening (1005), a sixth opening (1006), and a seventh opening (1007),
the fifth opening (1005) is located in the first heat exchange module (120) or in a tube or a block fixedly connected or limitedly connected to the first heat exchange module (120), and the fifth opening (1005) communicates with the first flow channel of the first heat exchange module (120);
the second opening (1002) is located in the first block (311), the first valve chamber (3133) is configured to communicate with the second opening (1002) through the first throttling chamber (3131') or the first through channel (3132), and the first gas-liquid separation chamber (3161) communicates with the second opening (1002);
the fourth opening (1004) is located in the fourth block (317), the second valve chamber (3153) is configured to communicate with the fourth opening (1004) through the second throttling chamber (3151') or the second through channel (3152), and the second gas-liquid separation chamber (3171) communicates with the fourth opening (1004);
the third opening (1003) is located in the fluid management module (300), and the first gas-liquid separation chamber (3161) and the second gas-liquid separation chamber (3171) communicate with the third opening (1003);
the first opening (1001) is located in the third side portion (230), the valve unit (400) is configured to open and close a communication channel between the first opening (1001) and the separation cavity;
the fourth opening (1004) is configured to communicate with a second flow channel through the throttling unit (500), and the fourth opening (1004) communicates with the second sub-channel (262); and
the fifth opening (1005) and the seventh opening (1007) are located in the gas-liquid separation portion (600), the seventh opening (1007) is an inlet of the gas-liquid separation portion (600), and the sixth opening (1006) is an outlet of the gas-liquid separation portion (600).

9. The fluid management device (10) according to claim 8, wherein the first opening (1001), the second opening (1002), the third opening (1003), the fourth opening (1004), the fifth opening (1005), the sixth opening (1006), and the seventh opening (1007) face upwards along the direction of gravity.

10. A thermal management system, comprising a compressor (1), a first heat exchanger (2), a second heat exchanger (3), and the fluid management device (10) according to any one of claims 1 to 9, wherein
the fluid management device (10) is provided with a first opening (1001), a second opening (1002) (1002), a third opening (1003), a fourth opening (1004), a fifth opening (1005), a sixth opening (1006), and a seventh opening (1007); an outlet of the compressor (1) communicates with the fifth opening (1005), the second opening (1002) communicates with the first opening (1001) through the first heat exchanger (2), the third opening (1003) communicates with a first inlet of the compressor (1), the fourth opening (1004) communicates with the fifth opening (1005) through the second heat exchanger (3), and the sixth opening (1006) communicates with a second inlet of the compressor (1).

## Patentansprüche

1. Fluidmanagementvorrichtung (10), umfassend ein Wärmeaustauschmodul (100), ein Fluidmanagementmodul (300) und einen Verbinder (200), **dadurch gekennzeichnet, dass**
die Fluidmanagementvorrichtung (10) einen Kommunikationskanal aufweist, wobei sich zumindest ein Teil des Kommunikationskanals in dem Verbinder (200) befindet, und der Kommunikationskanal mit einem Strömungskanal des Wärmeaustauschmoduls (100) in Verbindung steht;
das Fluidmanagementmodul (300) einen Block und einen Ventilkern umfasst, wobei der Ventilkern einen Durchgangskanal aufweist; das Fluidmanagementmodul (300) eine Drosselkammer, eine Ventilkammer und eine Gas-Flüssigkeits-Trennkammer aufweist, wobei sich die Ventilkammer und die Gas-Flüssigkeits-Trennkammer innerhalb des Blocks befinden, die Ventilkammer mit dem Kommunikationskanal in Verbindung steht und der Ventilkern in der Ventilkammer angeordnet ist; in einem Arbeitszustand der Fluidmanagementvorrichtung (10) ist der Ventilkern so konfiguriert, dass die Ventilkammer über die Drosselkammer oder den Durchgangskanal mit der Gas-Flüssigkeits-Trennkammer in Verbindung steht;
der Verbinder (200) einen ersten Seitenabschnitt (210) und einen zweiten Seitenabschnitt (220) umfasst, das Wärmeaustauschmodul (100) fest oder begrenzt mit dem ersten Seitenabschnitt (210) verbunden ist und der Block fest oder begrenzt mit dem zweiten Seitenabschnitt (220) verbunden ist; und
das Wärmeaustauschmodul (100) umfasst eine Vielzahl von gestapelten Platten, entlang einer Stapelrichtung der Platten befindet sich zumindest ein Teil des Wärmeaustauschmoduls (100) auf einer Seite des Verbinders (200), mindestens ein Teil des Fluidmanagementmoduls (300) befindet sich auf der anderen Seite des Verbinders (200), und das Wärmeaustauschmodul (100) und das Fluidmanagementmodul (300) sind auf verschiedenen Seiten des Verbinders (200) angeordnet.

2. Fluidmanagementvorrichtung (10) nach Anspruch 1, wobei
der Verbinder (200) einen dritten Seitenabschnitt (230) umfasst, wobei sich der erste Seitenabschnitt (210) entlang der Stapelrichtung der Platten auf einer Seite des dritten Seitenabschnitts (230) befindet und sich der zweite Seitenabschnitt (220) auf der anderen Seite des dritten Seitenabschnitts befindet (230) befindet;
die Fluidmanagementvorrichtung (10) eine Ventileinheit (400) und eine Drosseleinheit (500) umfasst,
der Verbinder (200) einen Befestigungsabschnitt (280) umfasst, der Befestigungsabschnitt (280) ein erstes Befestigungsloch (281) und ein zweites Befestigungsloch (282) aufweist, das erste Befestigungsloch (281) und das zweite Befestigungsloch (282) jeweils eine Öffnung in einer Wand des dritten Seitenabschnitts (230) aufweisen, mindestens ein Teil der Ventileinheit (400) befindet sich an der ersten Befestigungsöffnung (281) und mindestens ein Teil der Drosseleinheit (500) befindet sich an der zweiten Befestigungsöffnung (282).

3. Fluidmanagementvorrichtung (10) gemäß Anspruch 2, wobei
der Verbinder (200) einen vierten Seitenabschnitt (240) umfasst, wobei sich der erste Seitenabschnitt (210) entlang der Stapelrichtung der Platten auf einer Seite des vierten Seitenabschnitts (240) befindet und sich der zweite Seitenabschnitt (220) auf der anderen Seite, die der einen Seite gegenüberliegt, des vierten Seitenabschnitts (240) befindet; der dritte Seitenabschnitt (230) in Richtung der Schwerkraft über dem vierten Seitenabschnitt (240) angeordnet ist; und
die Fluidmanagementvorrichtung (10) einen Gas-Flüssigkeits-Trennabschnitt (600) umfasst, wobei der Gas-Flüssigkeits-Trennabschnitt (600) fest oder begrenzt mit dem vierten Seitenabschnitt (240) verbunden ist, der Gas-Flüssigkeits-Trennabschnitt (600) einen Trennhohlraum aufweist, der Verbindungskanal eine Öffnung aufweist, die dem Gas-Flüssigkeits-Trennabschnitt (600) zugewandt ist, sich im vierten Seitenabschnitt (240) befindet und der Verbindungskanal mit dem Trennhohlraum in Verbindung steht.

4. Fluidmanagementvorrichtung (10) nach einem der Ansprüche 1 bis 3, wobei
das Wärmetauschermodul (100) ein erstes Wärmetauschermodul (120) umfasst und das erste Wärmetauschermodul (120) einen ersten Strömungskanal aufweist; der Verbindungskanal einen ersten Verbindungskanal (250) umfasst und der erste Verbindungskanal (250) eine Öffnung im ersten Seitenabschnitt (210) aufweist; der erste Strömungskanal des ersten Wärmeaustauschmoduls (120) mit dem ersten Verbindungskanal (250) in Verbindung steht und der erste Verbindungskanal (250) eine Öffnung im zweiten Seitenabschnitt (220) aufweist; und
der Block umfasst einen ersten Block (311) und einen zweiten Block (316), wobei der erste Block (311) fest mit dem zweiten Block (316) verbunden oder begrenzt mit diesem verbunden ist; die Ventilkammer umfasst eine erste Ventilkammer (3133), die Gas-Flüssigkeits-Trennkammer umfasst eine erste Gas-Flüssigkeits-Trennkammer (3161), die erste Gas-Flüssigkeits-Trennkammer (3161) befindet sich innerhalb des zweiten Blocks (316), die erste Ventilkammer (3133) befindet sich innerhalb des ersten Blocks (311);
der Ventilkern umfasst einen ersten Ventileinsatz (313), der erste Ventileinsatz (313) ist in der ersten Ventilkammer (3133) angeordnet, der erste Ventileinsatz (313) umfasst einen ersten Durchgangskanal (3132), die Drosselkammer umfasst eine erste Drosselkammer (3131'), der erste Ventilkern (313) ist so konfiguriert, dass die erste Ventilkammer (3133) über die erste Drosselkammer (3131') oder den ersten Durchgangskanal (3132) mit der ersten Gas-Flüssigkeits-Trennkammer (3161) in Verbindung steht; der erste Block (311) eine Öffnung aufweist, die dem zweiten Seitenabschnitt (220) zugewandt ist, und der erste Verbindungskanal (250) mit der ersten Ventilkammer (3133) in Verbindung steht.

5. Fluidmanagementvorrichtung (10) nach Anspruch 4, wobei
der Kommunikationskanal einen zweiten Kommunikationskanal (260) umfasst, der zweite Kommunikationskanal (260) eine Öffnung im dritten Seitenabschnitt (230) aufweist und der zweite Kommunikationskanal (260) einen ersten Unterkanal (261), einen zweiten Unterkanal (262) und einen dritten Unterkanal (263) umfasst; und wobei
der erste Unterkanal (261), der zweite Unterkanal (262) und der dritte Unterkanal (263) mit der Öffnung des zweiten Kommunikationskanals (260) im dritten Seitenabschnitt (230) kommunizieren; der erste Unterkanal (261) eine Öffnung im ersten Seitenabschnitt (210) aufweist, der zweite Unterkanal (262) eine Öffnung im zweiten Seitenabschnitt (220) aufweist, der dritte Teilkanal (263) hat eine Öffnung, die dem Gas-Flüssigkeits-Trennteil (600) zugewandt ist, im vierten Seitenabschnitt (240), und der dritte Teilkanal (263) steht mit dem Trennhohlraum in Verbindung.

6. Fluidmanagementvorrichtung (10) nach Anspruch 5, wobei
das Wärmeaustauschmodul (100) ferner ein zweites Wärmeaustauschmodul (110) umfasst und die Fluidmanagementvorrichtung (10) ferner eine Ventileinheit (400) und eine Drosseleinheit (500) umfasst, wobei
das zweite Wärmeaustauschmodul (110) einen ersten Strömungskanal aufweist, wobei die Öffnung des ersten Teilkanals (261) im ersten Seitenabschnitt (210) dem zweiten Wärmeaustauschmodul (110) zugewandt ist und der erste Strömungskanal des zweiten Wärmeaustauschmoduls (110) mit dem ersten Teilkanal (261) in Verbindung steht; eine Wand des zweiten Befestigungslochs (282) eine Öffnung aufweist, die mit dem ersten Teilkanal (261) in Verbindung steht, die Drosseleinheit (500) so konfiguriert ist, dass sie einen Öffnungsgrad des ersten Teilkanals (261) einstellt; eine Wand des ersten Befestigungslochs (281) eine Öffnung aufweist, die mit dem dritten Unterkanal (263) in Verbindung steht, und die Ventileinheit (400) so konfiguriert ist, dass sie den dritten Unterkanal (263) öffnet oder schließt.

7. Fluidmanagementvorrichtung (10) nach Anspruch 5 oder 6, wobei
die Ventilkammer eine zweite Ventilkammer (3153) umfasst, die Gas-Flüssigkeits-Trennkammer eine zweite Gas-Flüssigkeits-Trennkammer (3171) umfasst, der Ventilkern einen zweiten Ventilkern (315) umfasst, der zweite Ventilkern (315) sich in der zweiten Ventilkammer (3153) befindet, der zweite Ventilkern (315) einen zweiten Durchgangskanal (3152) aufweist, die Drosselkammer eine zweite Drosselkammer (3151') umfasst, der zweite Ventilkern (315) so konfiguriert ist, dass die zweite Ventilkammer (3153) über die zweite Drosselkammer (3151') oder den zweiten Durchgangskanal (3152) mit der zweiten Gas-Flüssigkeits-Trennkammer (3171) in Verbindung steht; und
der Block umfasst einen dritten Block (312) und einen vierten Block (317), der dritte Block (312) ist fest oder begrenzt mit dem vierten Block (317) verbunden, die zweite Ventilkammer (3153) befindet sich innerhalb des dritten Blocks (312), mindestens ein Teil der zweiten Gas-Flüssigkeits-Trennkammer (3171) befindet sich im vierten Block (317), der dritte Block (312) hat eine Öffnung, die zum zweiten Seitenabschnitt (220) zeigt, und der zweite Unterkanal (262) steht mit der zweiten Ventilkammer (3153) in Verbindung.

8. Fluidmanagementvorrichtung (10) nach Anspruch 7, wobei
die Fluidmanagementvorrichtung (10) mit einer ersten Öffnung (1001), einer zweiten Öffnung (1002), einer dritten Öffnung (1003), einer vierten Öffnung (1004), einer fünften Öffnung (1005), einer sechsten Öffnung (1006) und einer siebten Öffnung (1007) versehen ist,
die fünfte Öffnung (1005) sich im ersten Wärmeaustauschmodul (120) oder in einem Rohr oder einem Block befindet, der fest mit dem ersten Wärmeaustauschmodul (120) verbunden oder begrenzt mit diesem verbunden ist, und die fünfte Öffnung (1005) mit dem ersten Strömungskanal des ersten Wärmeaustauschmoduls (120) in Verbindung steht;
die zweite Öffnung (1002) sich im ersten Block (311) befindet, die erste Ventilkammer (3133) ist so konfiguriert, dass sie über die erste Drosselkammer (3131') oder den ersten Durchgangskanal (3132) mit der zweiten Öffnung (1002) in Verbindung steht, und die erste Gas-Flüssigkeits-Trennkammer (3161) steht mit der zweiten Öffnung (1002) in Verbindung;
die vierte Öffnung (1004) sich im vierten Block (317) befindet, die zweite Ventilkammer (3153) so konfiguriert ist, dass sie über die zweite Drosselkammer (3151') oder den zweiten Durchgangskanal (3152) mit der vierten Öffnung (1004) in Verbindung steht, und die zweite Gas-Flüssigkeits-Trennkammer (3171) mit der vierten Öffnung (1004) in Verbindung steht;
die dritte Öffnung (1003) sich im Fluidmanagementmodul (300) befindet, und die erste Gas-Flüssigkeits-Trennkammer (3161) und die zweite Gas-Flüssigkeits-Trennkammer (3171) stehen mit der dritten Öffnung (1003) in Verbindung;
die erste Öffnung (1001) sich im dritten Seitenabschnitt (230) befindet, die Ventileinheit (400) ist so konfiguriert, dass sie einen Verbindungskanal zwischen der ersten Öffnung (1001) und dem Trennhohlraum öffnet und schließt;
die vierte Öffnung (1004) so konfiguriert ist, dass sie über die Drosseleinheit (500) mit einem zweiten Strömungskanal in Verbindung steht, und die vierte Öffnung (1004) steht mit dem zweiten Unterkanal (262) in Verbindung; und
die fünfte Öffnung (1005) und die siebte Öffnung (1007) sich im Gas-Flüssigkeits-Trennbereich (600) befinden, wobei die siebte Öffnung (1007) ein Einlass des Gas-Flüssigkeits-Trennbereichs (600) ist und die sechste Öffnung (1006) ein Auslass des Gas-Flüssigkeits-Trennbereichs (600) ist.

9. Fluidmanagementvorrichtung (10) nach Anspruch 8, wobei die erste Öffnung (1001), die zweite Öffnung (1002), die dritte Öffnung (1003), die vierte Öffnung (1004), die fünfte Öffnung (1005), die sechste Öffnung (1006) und die siebte Öffnung (1007) entlang der Schwerkraftrichtung nach oben zeigen.

10. Thermomanagementsystem, umfassend einen Kompressor (1), einen ersten Wärmetauscher (2), einen zweiten Wärmetauscher (3) und die Fluidmanagementvorrichtung (10) gemäß einem der Ansprüche 1 bis 9, wobei
die Fluidmanagementvorrichtung (10) mit einer ersten Öffnung (1001), einer zweiten Öffnung (1002) (1002), einer dritten Öffnung (1003), einer vierten Öffnung (1004), einer fünften Öffnung (1005), einer sechsten Öffnung (1006) und einer siebten Öffnung (1007) versehen ist; ein Auslass des Kompressors (1) mit der fünften Öffnung (1005) in Verbindung steht, die zweite Öffnung (1002) über den ersten Wärmetauscher (2) mit der ersten Öffnung (1001) in Verbindung steht, die dritte Öffnung (1003) mit einem ersten Einlass des Kompressors (1) in Verbindung steht, die vierte Öffnung (1004) ist über den zweiten Wärmetauscher (3) mit der fünften Öffnung (1005) verbunden, und die sechste Öffnung (1006) ist mit einem zweiten Einlass des Kompressors (1) verbunden.

## Revendications

1. Dispositif de gestion de fluides (10) comprenant un module d'échange thermique (100), un module de gestion de fluides (300) et un connecteur (200), **caractérisé en ce que**
le dispositif de gestion de fluides (10) comprend un canal de liaison, au moins une partie du canal de liaison est située dans le connecteur (200) et le canal de liaison est relié à un canal d'écoulement du module d'échange thermique (100) ;
le module de gestion de fluides (300) comprend un bloc et un noyau de soupape, le noyau de soupape comprend un canal de passage ; le module de gestion de fluides (300) comprend une chambre d'étranglement, une chambre de soupape et une chambre de séparation gaz/liquide, la chambre de soupape et la chambre de séparation gaz/liquide sont situées à l'intérieur du bloc, la chambre de soupape est reliée au canal de liaison, le noyau de soupape est disposé dans la chambre de soupape ; dans un état de fonctionnement du dispositif de gestion de fluides (10), le noyau de soupape est conçu pour relier la chambre de soupape à la chambre de séparation gaz/liquide par l'intermédiaire de la chambre d'étranglement ou du canal de passage ;
le connecteur (200) comprend une première section latérale (210) et une deuxième section latérale (220), le module d'échange thermique (100) est relié de manière fixe ou limitée à la première section latérale (210) et le bloc est relié de manière fixe ou limitée à la deuxième section latérale (220) ; et
le module d'échange thermique (100) comprend une pluralité de plaques empilées, au moins une partie du module d'échange thermique (100) est située d'un côté du connecteur (200) dans le sens d'empilement des plaques, au moins une partie du module de gestion de fluides (300) est située de l'autre côté du connecteur (200), et le module d'échange thermique (100) et le module de gestion de fluides (300) sont disposés sur des côtés différents du connecteur (200).

2. Le dispositif de gestion de fluides (10) selon la revendication 1, sachant que
le connecteur (200) comprend une troisième section latérale (230), la première section latérale (210) est située d'un côté de la troisième section latérale (230) et la deuxième section latérale (220) est située de l'autre côté de la troisième section latérale (230) dans le sens d'empilement des plaques ;
le dispositif de gestion de fluides (10) comprend une unité de soupape (400) et une unité d'étranglement (500),
le connecteur (200) comprend une section de fixation (280), la section de fixation (280) présente une première ouverture de fixation (281) et une deuxième ouverture de fixation (282), la première ouverture de fixation (281) et la deuxième ouverture de fixation (282) ont chacune une ouverture dans une paroi de la troisième section latérale (230), au moins une partie de l'unité de soupape (400) est située au niveau de la première ouverture de fixation (281) et au moins une partie de l'unité d'étranglement (500) est située au niveau de la deuxième ouverture de fixation (282).

3. Le dispositif de gestion de fluides (10) selon la revendication 2, sachant que
le connecteur (200) comprend une quatrième section latérale (240), dans le sens de la direction d'empilement des plaques, la première section latérale (210) est située d'un côté de la quatrième section latérale (240) et la deuxième section latérale (220) est située de l'autre côté de la quatrième section latérale (240), qui est opposé à ce côté, et la troisième section latérale (230) est disposée dans le sens de la gravité au-dessus de la quatrième section latérale (240) ; et
le dispositif de gestion de fluides (10) comprend une section de séparation gaz/liquide (600), la section de séparation gaz/liquide (600) est reliée de manière fixe ou limitée à la quatrième section latérale (240), la section de séparation gaz/liquide (600) présente une cavité de séparation, le canal de liaison dans la quatrième section latérale (240) présente une ouverture qui fait face à la section de séparation gaz/liquide (600), et le canal de liaison est relié à la cavité de séparation.

4. Le dispositif de gestion de fluides (10) selon l'une des revendications 1 à 3, sachant que
le module d'échange thermique (100) comprend un premier module d'échange thermique (120) et le premier module d'échange thermique (120) comprend un premier canal d'écoulement ; le canal de liaison comprend un premier canal de liaison (250) et le premier canal de liaison (250) présente une ouverture dans la première section latérale (210) ; le premier canal d'écoulement du premier module d'échange thermique (120) est relié au premier canal de liaison (250) et le premier canal de liaison (250) présente une ouverture dans la deuxième section latérale (220) ; et
le bloc comprend un premier bloc (311) et un deuxième bloc (316), le premier bloc (311) est relié de manière fixe ou limitée au deuxième bloc (316) ; la chambre de soupape comprend une première chambre de soupape (3133), la chambre de séparation gaz/liquide comprend une première chambre de séparation gaz/liquide (3161), la première chambre de séparation gaz/liquide (3161) est située à l'intérieur du deuxième bloc (316) et la première chambre de soupape (3133) est située à l'intérieur du premier bloc (311) ;
le noyau de soupape comprend un premier noyau de soupape (313), le premier noyau de soupape (313) est disposé dans la première chambre de soupape (3133), le premier noyau de soupape (313) comprend un premier canal de passage (3132), la chambre d'étranglement comprend une première chambre d'étranglement (3131'), le premier noyau de soupape (313) est conçu pour relier la première chambre de soupape (3133) à la première chambre de séparation gaz/liquide (3161) par l'intermédiaire de la première chambre d'étranglement (3131') ou du premier canal de passage (3132) ; le premier bloc (311) comprend une ouverture tournée vers la deuxième section latérale (220) et le premier canal de liaison (250) est relié à la première chambre de soupape (3133).

5. Le dispositif de gestion de fluides (10) selon la revendication 4, sachant que
le canal de liaison comprend un deuxième canal de liaison (260), le deuxième canal de liaison (260) comprend une ouverture dans la troisième section latérale (230), et le deuxième canal de liaison (260) comprend un premier canal partiel (261), un deuxième canal partiel (262) et un troisième canal partiel (263) ; et sachant que
le premier canal partiel (261), le deuxième canal partiel (262) et le troisième canal partiel (263) sont reliés à l'ouverture du deuxième canal de liaison (260) dans la troisième section latérale (230) ; le premier canal partiel (261) présente une ouverture dans la première section latérale (210), le deuxième canal partiel (262) présente une ouverture dans la deuxième section latérale (220), le troisième canal partiel (263) présente une ouverture, faisant face à la section de séparation gaz/liquide (600), dans la quatrième section latérale (240), et le troisième canal partiel (263) est relié à la cavité de séparation.

6. Le dispositif de gestion de fluides (10) selon la revendication 5, sachant que
le module d'échange thermique (100) comprend en outre un deuxième module d'échange thermique (110) et le dispositif de gestion de fluides (10) comprend en outre une unité de soupape (400) et une unité d'étranglement (500), sachant que
le deuxième module d'échange thermique (110) comprend un premier canal d'écoulement, l'ouverture du premier canal partiel (261) dans la première section latérale (210) est tournée vers le deuxième module d'échange thermique (110), le premier canal d'écoulement du deuxième module d'échange thermique (110) est relié au premier canal partiel (261) ; une paroi de la deuxième ouverture de fixation (282) présente une ouverture communiquant avec le premier canal partiel (261), l'unité d'étranglement (500) est conçue pour régler un degré d'ouverture du premier canal partiel (261) ; une paroi de la première ouverture de fixation (281) présente une ouverture communiquant avec le troisième canal partiel (263), et l'unité de soupape (400) est conçue pour ouvrir ou fermer le troisième canal partiel (263).

7. Le dispositif de gestion de fluides (10) selon la revendication 5 ou 6, sachant que
la chambre de soupape comprend une deuxième chambre de soupape (3153), la chambre de séparation gaz/liquide comprend une deuxième chambre de séparation gaz/liquide (3171), le noyau de soupape comprend un deuxième noyau de soupape (315), le deuxième noyau de soupape (315) est située dans la deuxième chambre de soupape (3153), le deuxième noyau de soupape (315) présente un deuxième canal de passage (3152), la chambre d'étranglement comprend une deuxième chambre d'étranglement (3151'), le deuxième noyau de soupape (315) est conçu pour mettre la deuxième chambre de soupape (3153) en communication avec la deuxième chambre de séparation gaz/liquide (3171) par l'intermédiaire de la deuxième chambre d'étranglement (3151') ou du deuxième canal de passage (3152) ; et
le bloc comprend un troisième bloc (312) et un quatrième bloc (317), le troisième bloc (312) est relié de manière fixe ou limitée au quatrième bloc (317), la deuxième chambre de soupape (3153) est située à l'intérieur du troisième bloc (312), au moins une partie de la deuxième chambre de séparation gaz/liquide (3171) est située dans le quatrième bloc (317), le troisième bloc (312) comprend une ouverture tournée vers la deuxième section latérale (220), et le deuxième canal partiel (262) est relié à la deuxième chambre de soupape (3153).

8. Le dispositif de gestion de fluides (10) selon la revendication 7, sachant que
le dispositif de gestion de fluides (10) est muni d'une première ouverture (1001), d'une deuxième ouverture (1002), d'une troisième ouverture (1003), d'une quatrième ouverture (1004), d'une cinquième ouverture (1005), d'une sixième ouverture (1006) et d'une septième ouverture (1007),
la cinquième ouverture (1005) est située dans le premier module d'échange thermique (120) ou dans un tube ou bloc relié de manière fixe ou limitée au premier module d'échange thermique (120), et la cinquième ouverture (1005) est reliée au premier canal d'écoulement du premier module d'échange thermique (120) ;
la deuxième ouverture (1002) est située dans le premier bloc (311), la première chambre de soupape (3133) est conçue pour être reliée à la deuxième ouverture (1002) par l'intermédiaire de la première chambre d'étranglement (3131') ou du premier canal de passage (3132), et la première chambre de séparation gaz/liquide (3161) est reliée à la deuxième ouverture (1002) ;
la quatrième ouverture (1004) est située dans le quatrième bloc (317), la deuxième chambre de soupape (3153) est conçue pour être reliée à la quatrième ouverture (1004) par l'intermédiaire de la deuxième chambre d'étranglement (3151') ou du deuxième canal de passage (3152), et la deuxième chambre de séparation gaz/liquide (3171) est reliée à la quatrième ouverture (1004) ;
la troisième ouverture (1003) est située dans le module de gestion de fluides (300), et la première chambre de séparation gaz/liquide (3161) et la deuxième chambre de séparation gaz/liquide (3171) sont reliées à la troisième ouverture (1003) ;
la première ouverture (1001) est située dans la troisième section latérale (230) et l'unité de soupape (400) est conçue pour ouvrir et fermer un canal de liaison entre la première ouverture (1001) et la cavité de séparation ;
la quatrième ouverture (1004) est conçue pour être reliée à un deuxième canal d'écoulement par l'intermédiaire de l'unité d'étranglement (500), et la quatrième ouverture (1004) est reliée au deuxième canal partiel (262) ; et
la cinquième ouverture (1005) et la septième ouverture (1007) sont situées dans la section de séparation gaz/liquide (600), la septième ouverture (1007) est une entrée de la section de séparation gaz/liquide (600) et la sixième ouverture (1006) est une sortie de la section de séparation gaz/liquide (600).

9. Le dispositif de gestion de fluides (10) selon la revendication 8, sachant que la première ouverture (1001), la deuxième ouverture (1002), la troisième ouverture (1003), la quatrième ouverture (1004), la cinquième ouverture (1005), la sixième ouverture (1006) et la septième ouverture (1007) sont orientées vers le haut dans le sens de la gravité.

10. Système de gestion de chaleur, comprenant un compresseur (1), un premier échangeur de chaleur (2), un deuxième échangeur de chaleur (3) et le dispositif de gestion de fluides (10) selon l'une des revendications 1 à 9, sachant que
le dispositif de gestion de fluides (10) est muni d'une première ouverture (1001), d'une deuxième ouverture (1002), d'une troisième ouverture (1003), d'une quatrième ouverture (1004), d'une cinquième ouverture (1005), d'une sixième ouverture (1006) et d'une septième ouverture (1007) ; une sortie du compresseur (1) est reliée à la cinquième ouverture (1005), la deuxième ouverture (1002) est reliée à la première ouverture (1001) par l'intermédiaire du premier échangeur de chaleur (2), la troisième ouverture (1003) est reliée à une première entrée du compresseur (1), la quatrième ouverture (1004) est reliée à la cinquième ouverture (1005) par l'intermédiaire du deuxième échangeur de chaleur (3), et la sixième ouverture (1006) est reliée à une deuxième entrée du compresseur (1).
